# EUROPEAN PATENT APPLICATION

(11) **EP 2 377 438 A1**
(43) Date of publication of application: **19.10.2011**
(21) Application number: 09832813.1
(22) Date of filing: 15.12.2009
(51) Int. Cl.: A47J 37/06, A21B 1/00, A21B 3/15

(54) **MULTIFUNCTIONAL BREAD MACHINE**

(30) Priority: 15.12.2008 CN 200820205492 U; 15.12.2008 CN 200820205493 U; 15.12.2008 CN 200820205491 U
(71) Applicant: Wang, Tony, Guangdong 519085 (CN)
(72) Inventor: Wang, Tony, Guangdong 519085 (CN)
(74) Representative: Swinkels, Bart Willem
(86) International application number: PCT/CN2009/001443
(87) International publication number: WO 2010/069131

(57) **Abstract**

A multifunctional bread machine is provided. The bread machine includes a casing, an oven, a door or a cover that close the oven, a bread barrel and more than one suite of food roasting-supporting device. The bread barrel is installed in the cavity of the oven when the bread barrel is utilized for making bread; the food roasting-supporting device is installed in the cavity of the oven when the food roasting-supporting device is utilized for roasting food. The food roasting-supporting device includes a grill and a baking tray (8). The grill includes a longitudinal supporting frame (11, 21, 31), a supporting-holding frame (15, 25, 35) for supporting the baking tray (8) and a supporting underframe (34). The longitudinal supporting frame (11, 21, 31) is in the middle, and the supporting-holding frame (15, 25, 35) is on both sides of the longitudinal supporting frame (11, 21, 31). The longitudinal supporting frame (11, 21, 31) is provided with a connecting piece (12, 22, 32). The supporting-holding frame (15, 25, 35) is moveably connected with the longitudinal supporting frame (11, 21, 31) by the connecting piece (12, 22, 32).

## Description

### TECHNICAL FIELD

The present invention relates to a multifunctional bread maker, and more particularly, to a grill of the bread maker for toasting bread in the field of Household Appliances.

### BACKGROUND OF THE INVENTION

The grill of the bread maker in the prior art comprises an integral and non-detachable shelf and trays with curved cross-section. The shelf and trays of the bread maker with such structures occupy much space when in package and in transit, and they are not convenient for the consumers in storage.

### SUMMARY OF THE INVENTION

The present invention is aimed at providing a multifunctional bread maker comprising a grill which can reduce the size of the package and the volume in transit. The multifunctional bread maker is simple in structure, practical and convenient for use.

The present invention is achieved by the following technical scheme:
A multifunctional bread maker, comprises a casing, an oven disposed inside the casing, a door or a cover for closing the oven; and further comprises a bread bucket which has an upward opening and is easily loaded and unloaded, more than one set of support device for toasting food; the bread bucket is loaded in a cavity of the oven when it is necessary to use the bread bucket to make bread, and the support device for toasting food is loaded in the cavity of the oven when it is necessary to use the support device for toasting food to toast food; the support device for toasting food comprises a grill and toasting pans; heating elements are disposed in the cavity of the oven; wherein the grill comprises a longitudinal supporting frame, one or more supporting-holding frames for supporting the toasting pans, and supporting underframes; the longitudinal supporting frame is located in the middle of the grill; the supporting-holding frame is located on both sides of the longitudinal supporting frame; and the longitudinal supporting frame is provided with one or more connecting pieces, thereby the supporting-holding frames are removably or rotatablely connected with the longitudinal supporting frame.

In summary, the present invention has following advantages:
In the multifunctional bread maker of the present invention, the grill comprises the longitudinal supporting frame, the one or more supporting-holding frames for supporting the toasting pans and the supporting underframes. The longitudinal supporting frame is located in the middle of the grill. The supporting-holding frame is located on both sides of the longitudinal supporting frame. The longitudinal supporting frame is provided with one or more connecting pieces, thereby the supporting-holding frames are removably or rotatablely connected with the longitudinal supporting frame.

Consumers can disassemble or fold the grill of the bread maker without any difficulties, and can easily assemble the grill based on the same working principle. The grill and the pans of the bread maker with such structures don't occupy large space when in package and in transit, they are simple in structure, convenient for the consumers in storage and in use.

### BRIEF DESCRIPTION OF THE DRAWINGS

Fig. 1 is a schematic view illustrating the grill of the multifunctional bread maker according to the first embodiment of the present invention;
Fig. 2 is a schematic view illustrating the grill of the multifunctional bread maker according to the second embodiment of the present invention;
Fig. 3 is a schematic view illustrating the grill of the multifunctional bread maker according to the third embodiment of the present invention;
Fig. 4 is a sectional view illustrating the first example of the toasting pan of the multifunctional bread maker according to the present invention;
Fig. 5 is a stereogram illustrating the second example of the toasting pan of the multifunctional bread maker according to the present invention;
Fig. 6 is a stereogram illustrating the third example of the toasting pan of the multifunctional bread maker according to the present invention.

### DETAILED DESCRIPTION OF THE PREFERRED EMBODIMENTS

The present invention discloses a multifunctional bread maker which comprises a casing, an oven disposed inside the casing and a door or a cover for closing the oven. The multifunctional bread maker further comprises a bread bucket which has an upward opening and is easily loaded and unloaded, and more than one set of support device for toasting food. The bread bucket is loaded in a cavity of the oven when it is necessary to use the bread bucket to make bread, and the support device for toasting food is loaded in the cavity of the oven when it is necessary to use the support device for toasting food to toast food. The support device for toasting food comprises a grill and toasting pans. Heating elements are disposed in the cavity of the oven. The grill comprises a longitudinal supporting frame, one or more supporting-holding frames for supporting the toasting pans, and supporting underframes. The longitudinal supporting frame is located in the middle of the grill. The supporting-holding frame is located on both sides of the longitudinal supporting frame. The longitudinal supporting frame is provided with one or more connecting pieces, thereby the supporting-holding frames are removably or rotatablely connected with the longitudinal supporting frame.

### The First Embodiment

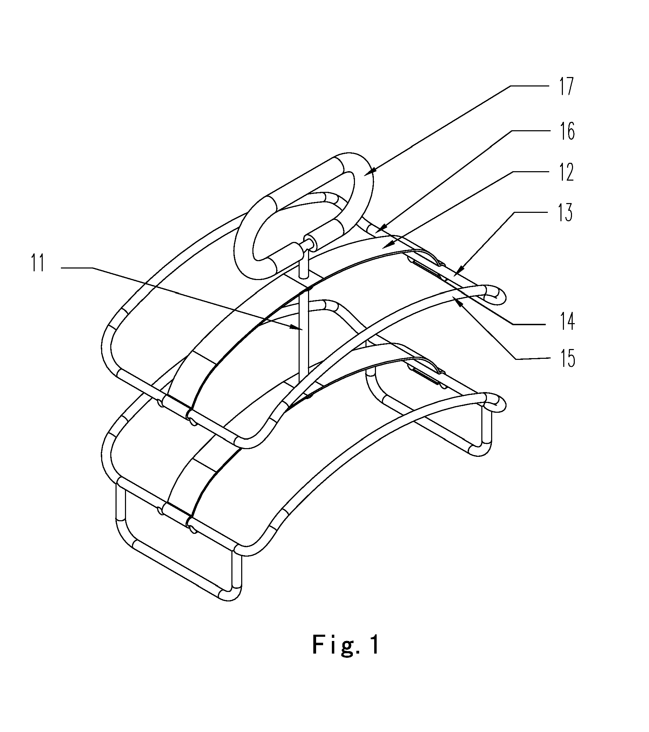

As shown in Fig. 1, the grill of the bread maker is simple and detachable. The longitudinal supporting frame is a central supporting frame which is removably connected with the supporting-holding frame 15.

The central supporting frame comprises at least a central supporting pole 11 which is straight and perpendicular to the horizontal plane. More than one elastic connecting piece 12, which is removably connected with the supporting-holding frame 15, is fixed on the central supporting pole 11. The elastic connecting piece 12 is in the shape of a curved surface or an arc, with hooked bends 14 at its two ends.

The supporting-holding frame 15 is a quadrilateral framework, of which two sides parallel to the elastic connecting piece 12 are in the shape of arc and the other two sides are connecting sides 13 connected with the elastic connecting piece 12, each of the connecting sides 13 is removably fit into one hooked bend 14 of the elastic connecting piece 12.

The connecting side 13 is provided with stop blocks 16 to confine the hooked bend to the connecting side 13.

The stop blocks 16 are in the shape of protrusion or concave.

A handle 17 is disposed on the central supporting pole 11. The elastic connecting piece 12, which is disposed on the central supporting pole 11 and removably connected with the supporting-holding frame 15, is made of metal rod or metal strip. The connecting sides 13 of the supporting-holding frame 15 are made of elastic wire.

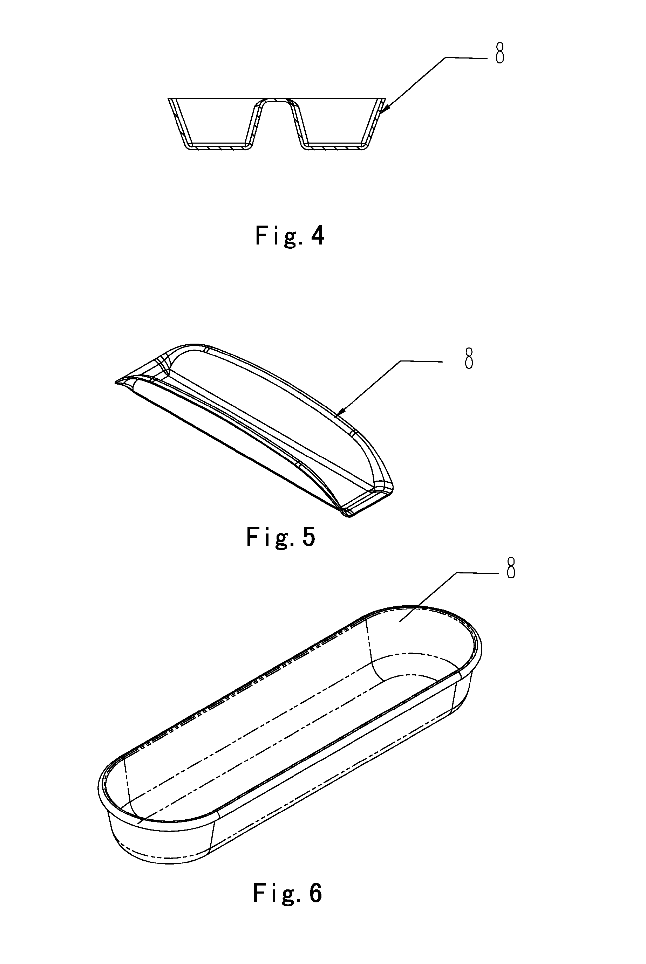

As shown in Figs.1, 4, 5 and 6, preferably, two elastic connecting pieces 12 are disposed respectively at the intermediate position and at the bottom of the central supporting pole 11. Two sets of supporting-holding frames 15 are fixed respectively on the two elastic connecting pieces 12. Two toasting pans 8 are placed symmetrically on the right and the left of each supporting-holding frame 15, namely, in the space between the elastic connecting pieces 12 and the curved sides of the supporting-holding frame 15 which are parallel to the elastic connecting piece 12. Supporting underframes perpendicular to the horizontal plane are disposed at the two ends of the bottom of the lower supporting-holding frame 15.

The cross-section of the toasting pan 8 is in the shape of a trapezium or a letter W.

The toasting pan 8 has walls of the same height or has the varying depth from deep to shallow as from middle to two ends.

With the technical scheme of this embodiment, the grill of the bread maker is an all detachable frame and the trays can be laid to overlap each other. Consumers can disassemble the grill apart simply by the following steps: hold the handle; press the curved elastic connecting piece lightly, then the elastic connecting piece will be in elastic deformation and the hooked bends of the elastic connecting piece can break loose from the connecting sides of the supporting-holding frame. The grill can be assembled based on the same working principle above.

### The Second Embodiment

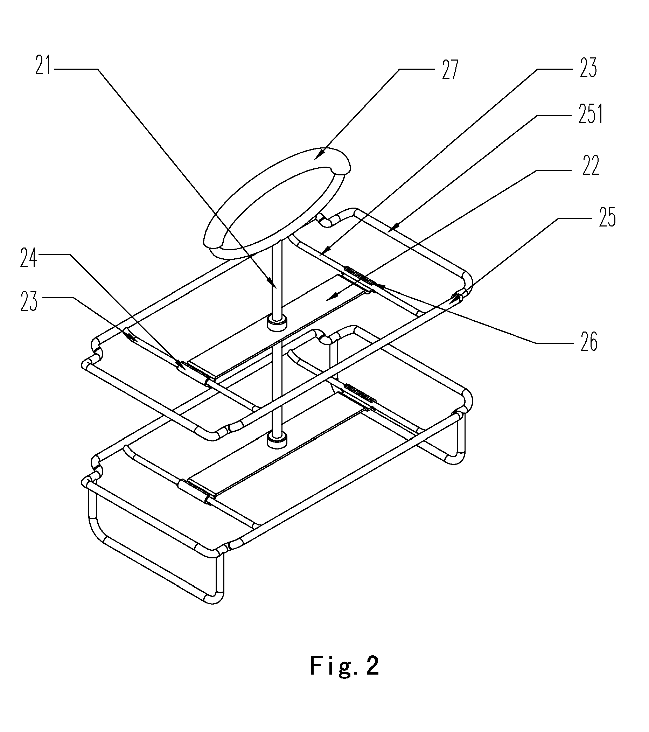

As shown in Fig.2, the grill of the bread maker is simple and detachable. The longitudinal supporting frame is a central supporting frame which is removably connected with the supporting-holding frame 25.

The central supporting frame comprises at least one central supporting pole 21 which is straight and perpendicular to the horizontal plane. More than one connecting piece 22, which is removably connected with the supporting-holding frame 25, are disposed on the central supporting pole 21. The connecting piece 22 is in the shape of a planar strip or a straight rod with hooked bends 24 at its two ends.

The supporting-holding frame 25 is a quadrilateral framework, of which two sides are parallel to the connecting piece 22 and the other two sides 251 are vertical to the connecting piece 22. The supporting-holding frame 25 is provided with two connecting rods 23 which are parallel to the sides 251 and are connected respectively with the two ends of the connecting piece 22. Each of the connecting rods 23 is removably fit into one hooked bend 24 of the connecting piece 22.

The connecting rods 23 are elastic.

The connecting rod 23 is provided with stop blocks 26 to confine the hooked bend 24 to the connecting rod 23. The stop blocks 26 are in the shape of protrusion or concave.

A handle 27 is disposed on the central supporting pole 21.

The connecting piece 22, which is disposed on the central supporting pole 21 and removably connected with the supporting-holding frame 25, is made of metal rod or metal strip. The connecting rods 23 of the supporting-holding frame 15 are made of elastic wire.

As shown in Figs.2, 4, 5 and 6, preferably, two connecting pieces 22 are disposed respectively at the intermediate position and at the bottom of the central supporting pole 21. Two sets of supporting-holding frames 25 are fixed respectively on the two connecting pieces 22. Two toasting pans 8 are placed symmetrically on the right and the left of each supporting-holding frame 25. Supporting underframes perpendicular to the horizontal plane are disposed at the two ends of the bottom of the lower supporting-holding frame 25.

The cross-section of the toasting pan 8 is in the shape of a trapezium or a letter W.

The toasting pan 8 has walls of the same height or has the varying depth from deep to shallow as from middle to two ends.

### The Third Embodiment

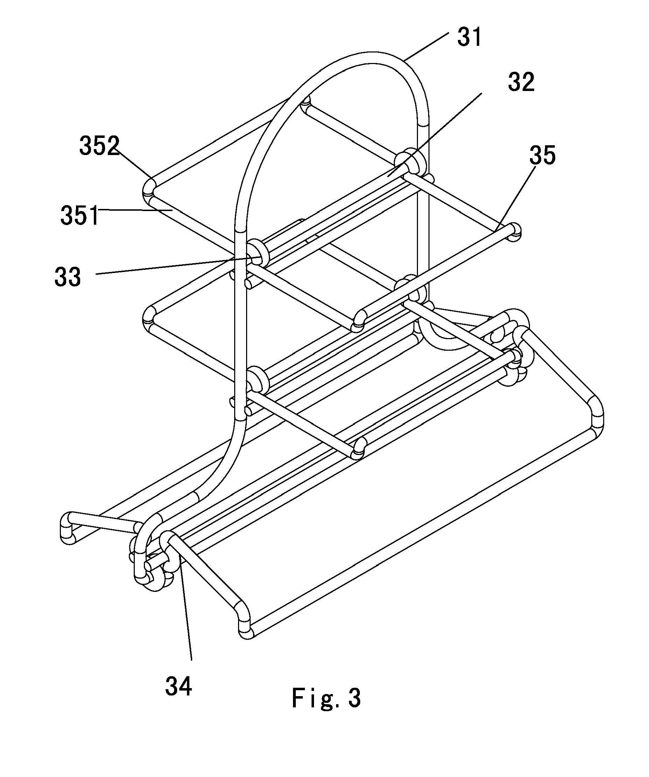

As shown in Figs.3, 4, 5 and 6, the grill of the bread maker is foldable. The longitudinal supporting frame is a central supporting frame which is rotatablely connected with the supporting-holding frame 35.

The central supporting frame comprises at least a central supporting pole 31 which is in the shape of an n-shaped bend and is perpendicular to the horizontal plane. More than one connecting piece 32, which is removably connected with the supporting-holding frame 35, is disposed on the central supporting pole 31. The connecting piece 32 is a horizontal metal bar which is connected between the two ends of the central supporting pole 31. The supporting-holding frame 35 consists of two frame units 351, each of which is a quadrilateral framework with an opening on the inner side. The frame unit 351 is provided with hooked bends 33 at the two ends which can be rotatablely mounted on the connecting piece 32. The two frame units 351 are located respectively on the two sides of the connecting piece 32 and each of the two frame units 351 is provided with a raised outer side 352 to prevent the toasting pan from slipping.

The grill has bottom frames 34, as its supporting underframes, disposed at the bottom of the central supporting pole 31. The bottom frames 34 are rotatablely mounted on the central supporting pole 31 and extend to the two sides of the central supporting pole 31.

The grill has an assembleable structure, which has a stereoscopic structure for supporting after being assembled and has the folding state of overlapping partly at least when in storage and in package. The foldable supporting-holding frames 35 are positioned at different heights. There are two or more sets of supporting-holding frames for accommodating separate toasting pan 8 or jointed toasting pan 8 at each level.

The cross-section of the toasting pan 8 is in the shape of a straight line, a trapezium or a rectangle. When the cross-section of the toasting pan 8 is in the shape of a trapezium, several separate or jointed toasting pans 8 can be laid to overlap each other so as to save space. So also can the toasting pans 8 when its cross-section is in the shape of a straight line.

At least part of the central supporting pole 31, the supporting-holding frame 35 and the bottom frames 34 of the grill are detachable and assembleable. When folded, the foldable supporting-holding frame 35 is parallel to or at a certain angle relative to the horizontal plane, e.g., the angle can be ranged from 0° to 60°.

The grill and the pans of the bread maker with such structures don't occupy large space when in package and in transit, and they are convenient for the consumers in storage.

The preferred embodiments described above are not restricted. It will be understood by those skilled in the art that various modifications and changes may be made therein without departing from the scope of the invention.

## Claims

1. A multifunctional bread maker, comprising a casing, an oven disposed inside the casing, a door or a cover for closing the oven; and further comprising a bread bucket which has an upward opening and is easily loaded and unloaded, more than one set of support device for toasting food; the bread bucket is loaded in a cavity of the oven when it is necessary to use the bread bucket to make bread, and the support device for toasting food is loaded in the cavity of the oven when it is necessary to use the support device for toasting food to toast food; the support device for toasting food comprises a grill and toasting pans; heating elements are disposed in the cavity of the oven; **characterized in that**: the grill comprises a longitudinal supporting frame, one or more supporting-holding frames for supporting the toasting pans, and supporting underframes; the longitudinal supporting frame is located in the middle of the grill; the supporting-holding frame is located on both sides of the longitudinal supporting frame; and the longitudinal supporting frame is provided with one or more connecting pieces, thereby the supporting-holding frames are removably or rotatablely connected with the longitudinal supporting frame.

2. The multifunctional bread maker according to claim 1, **characterized in that**: the grill of the bread maker is simple and detachable; and the longitudinal supporting frame is a central supporting frame which is removably connected with the supporting-holding frame.

3. The multifunctional bread maker according to claim 2, **characterized in that**: the central supporting frame comprises at least a central supporting pole (11) which is straight and perpendicular to the horizontal plane; more than one elastic connecting piece (12), which is removably connected with the supporting-holding frame (15), are disposed on the central supporting pole (11); and the elastic connecting piece (12) is in the shape of a curved surface or an arc with hooked bends (14) at its two ends.

4. The multifunctional bread maker according to claim 3, **characterized in that**: the supporting-holding frame (15) is a quadrilateral framework, of which two sides parallel to the elastic connecting piece (12) are in the shape of arc and the other two sides are connecting sides (13) connected with the elastic connecting piece (12); each of the connecting sides (13) is removably fit into one hooked bend (14) of the elastic connecting piece (12).

5. The multifunctional bread maker according to claim 4, **characterized in that**: the connecting side (13) is provided with stop blocks (16) to confine the hooked bend to the connecting side (13).

6. The multifunctional bread maker according to claim 5, **characterized in that**: a handle (17) is disposed on the central supporting pole (11); the elastic connecting piece (12), which is disposed on the central supporting pole (11) and removably connected with the supporting-holding frame (15), is made of metal rod or metal strip; and the connecting sides (13) of the supporting-holding frame (15) are made of elastic wire.

7. The multifunctional bread maker according to claim 6, **characterized in that**: two elastic connecting pieces (12) are disposed respectively at the intermediate position and at the bottom of the central supporting pole (11); two sets of supporting-holding frames (15) are fixed respectively on the two elastic connecting pieces (12); two toasting pans (8) are disposed symmetrically on the right and the left of each supporting-holding frame (15); the toasting pans (8) are placed in the space between the elastic connecting pieces (12) and the curved sides of the supporting-holding frame (15) which are parallel to the elastic connecting piece (12); and supporting underframes perpendicular to the horizontal plane are disposed at two ends of a bottom of a lower supporting-holding frame (15).

8. The multifunctional bread maker according to claim 2, **characterized in that**: the central supporting frame comprises at least one central supporting pole (21) which is straight and perpendicular to the horizontal plane; more than one connecting piece (22), which is removably connected with the supporting-holding frame (25), are disposed on the central supporting pole (21); and the connecting piece (22) is in the shape of a planar strip or a straight rod with hooked bends (24) at its two ends.

9. The multifunctional bread maker according to claim 8, **characterized in that**: the supporting-holding frame (25) is a quadrilateral framework, of which two sides are parallel to the connecting piece (22) and the other two sides (251) are vertical to the connecting piece (22); the supporting-holding frame (25) is provided with two connecting rods (23) which are parallel to the sides (251) and are connected respectively with two ends of the connecting piece (22); each of the connecting rods (23) is removably fit into one hooked bend (24) of the connecting piece (22).

10. The multifunctional bread maker according to claim 9, **characterized in that**: the connecting rods (23) are elastic.

11. The multifunctional bread maker according to claim 10, **characterized in that**: two connecting pieces (22) are disposed respectively at the intermediate position and at the bottom of the central supporting pole (21); two sets of supporting-holding frames 25 are disposed respectively on the two connecting pieces (22); two toasting pans 8 are placed symmetrically on the right and the left of each supporting-holding frame (25); and supporting underframes perpendicular to the horizontal plane are disposed at two ends of a bottom of a lower supporting-holding frame (25).

12. The multifunctional bread maker according to any one of claims 1-11, **characterized in that**: cross-section of the toasting pan (8) is in the shape of a trapezium or a letter W.

13. The multifunctional bread maker according to any one of claims 1-11, **characterized in that**: the toasting pan (8) has walls of the same height or has the varying depth from deep to shallow as from middle to two ends.

14. The multifunctional bread maker according to claim 1, **characterized in that**: the grill of the bread maker is foldable; and the longitudinal supporting frame is a central supporting frame which is rotatably connected with the supporting-holding frame (35).

15. The multifunctional bread maker according to claim 14, **characterized in that**: the central supporting frame comprises at least a central supporting pole (31) which is in the shape of an n-shaped bend and is perpendicular to the horizontal plane; more than one connecting piece (32), which is removably connected with the supporting-holding frame (35), are disposed on the central supporting pole (31); and the connecting piece (32) is a horizontal metal bar which is connected between two ends of the central supporting pole (31).

16. The multifunctional bread maker according to claim 15, **characterized in that**: the supporting-holding frame (35) is consisted of two frame units (351), each of which is a quadrilateral framework with an opening on the inner side; the frame unit (351) is provided with hooked bends (33) at its two ends, which can be rotatably mounted on the connecting piece (32); the two frame units (351) are located respectively on two sides of the connecting piece (32) and each of the two frame units (351) is provided with a raised outer side (352) to prevent the toasting pan from slipping.

17. The multifunctional bread maker according to claim 16, **characterized in that**: the supporting underframes of the grill are bottom frames (34) disposed at the bottom of the central supporting pole (31); and the bottom frames (34) are rotatably mounted on the central supporting pole (31) and extend to two sides of the central supporting pole (31).

18. The multifunctional bread maker according to claim 17, **characterized in that**: at least part of the central supporting pole (31), the supporting-holding frame (35) and the bottom frames (34) of the grill are detachable and assembleable; and when folded, the foldable supporting-holding frame (35) is parallel to or at a certain angle relative to the horizontal plane.
